# EUROPÄISCHE PATENTANMELDUNG

(11) **EP 1 921 586 A1**
(43) Veröffentlichungstag der Anmeldung: **14.05.2008**
(21) Anmeldenummer: 06023553.8
(22) Anmeldetag: 13.11.2006
(51) Int. Cl.: G07F 17/12, G06Q 10/00

(54) **Verfahren und Anordnung von Vorrichtungen zum Betreiben einer elektronischen Paketfachanlage**

(71) Anmelder: Deutsche Post AG, 53113 Bonn (DE)
(72) Erfinder: Frankenberg Steffen, 50674 Köln (DE); Alario, Flavio, 53225 Bonn (DE); Liss, Rebekka, 53225 Bonn (DE)
(74) Vertreter: Jostarndt, Hans-Dieter

(57) **Zusammenfassung**

Die Erfindung betrifft ein Verfahren zum Betreiben wenigstens einer elektronischen Paketfachanlage (10) umfassend mehrere Fächer (11), bei dem Postsendungen von wenigstens zwei Benutzergruppen mit unterschiedlichen Zugriffsrechten in die Fächer der Paketfachanlage (10) einstellbar sind. Die Paketfachanlage (10) steht in Verbindung mit einer zentralen Datenverarbeitungseinheit (30) und die Belegzustände der Fächer (11) der Paketfachanlage (10) werden an die Datenverarbeitungseinheit (30) übermittelt, so dass in einem Speichermittel (31) der Datenverarbeitungseinheit (30) die Anzahl an freien Fächern der Paketfachanlage (10) hinterlegt ist. Ferner steht die zentrale Datenverarbeitungseinheit (30) in Verbindung mit wenigstens einem Postverteilzentrum (20), in dem Zielinformationen von Postsendungen erfasst werden, wobei der Paketfachanlage (10) ebenfalls eine Zielinformation zugeordnet ist. Das erfindungsgemäße Verfahren zeichnet sich dadurch aus, dass die an die Paketfachanlage (10) adressierten Postsendungen in einem bestimmten Zeitraum gezählt werden und die entsprechende Anzahl von freien Fächern für eine erste Benutzergruppe reserviert wird. Wenigstens ein Teil der verbleibenden freien Fächer wird für eine zweite Benutzergruppe reserviert. Der Zugriff auf die Fächer der Paketfachanlage (10) wird anhand der Reservierungen für die einzelnen Benutzergruppen gesteuert. Nach einem bestimmten Zeitpunkt werden die Reservierungen aufgehoben und der Zugriff auf die verbleibenden Fächer für alle Benutzergruppen freigegeben.

Die Erfindung betrifft ferner eine Anordnung von Vorrichtungen zur Durchführung des Verfahrens.

## Beschreibung

Die Erfindung betrifft ein Verfahren zum Betreiben wenigstens einer elektronischen Paketfachanlage umfassend mehrere Fächer, wobei bei dem Verfahren Postsendungen von wenigstens zwei Benutzergruppen mit unterschiedlichen Zugriffsrechten in die Fächer der Paketfachanlage einstellbar sind. Die Paketfachanlage steht in Verbindung mit einer zentralen Datenverarbeitungseinheit und die Belegzustände der Fächer der Paketfachanlage werden an die Datenverarbeitungseinheit übermittelt, so dass in einem Speichermittel der Datenverarbeitungseinheit die Anzahl an freien Fächern der Paketfachanlage hinterlegt ist. Die zentrale Datenverarbeitungseinheit steht ferner in Verbindung mit wenigstens einem Postverteilzentrum, in dem Zielinformationen von Postsendungen erfasst werden, wobei der Paketfachanlage ebenfalls eine Zielinformation zugeordnet ist.

Die Erfindung betrifft ferner eine Anordnung von Vorrichtungen zur Durchführung des Verfahrens.

Aus dem Stand der Technik sind verschiedene Systeme bekannt, bei denen mehrere Benutzer Zugriff auf eine elektronische Schließfachanlage haben, die zur Einstellung und Abholung von Gegenständen genutzt werden kann. Bei den Systemen kann es sich beispielsweise um Postversandsysteme oder Warenhandelssysteme handeln. Bei Postversandsystemen besteht beispielsweise die Möglichkeit, Pakete nicht an der Heimadresse eines Empfängers abzugeben, sondern sie stattdessen in ein Fach einer bestimmten Paketfachanlage einzustellen. Der Empfänger der Sendung kann das Paket dann zu einem beliebigen Zeitpunkt an der Paketfachanlage abholen. Auch bei Warenhandelssystemen kann eine Einstellung von bestellten beziehungsweise gekauften Waren in einer entsprechenden Schließfachanlage erfolgen, so dass der Kunde seine Ware zu beliebigen Zeitpunkten an der Anlage abholen kann. Dies ist insbesondere für Bestellungen und Käufe über das Internet zweckmäßig.

Bei den Benutzern einer solchen Schließfachanlage handelt es sich üblicherweise wenigstens um mehrere Empfänger von Paketen oder sonstigen Warensendungen. Dieser Benutzergruppe wird der Zugriff auf Fächer der Schließfachanlage üblicherweise über einmalige oder permanente Zugangscodes gestattet. Dabei erhalten Empfänger beispielsweise Zugriff auf ein Fach, in dem ein an sie adressiertes Paket deponiert ist, um das Paket zu entnehmen. Benutzer dieser Benutzergruppe können jedoch auch Zugriff auf freie Fächer einer Paketfachanlage erhalten, um beispielsweise Retourensendungen einzustellen.

Bei anderen Benutzergruppen handelt es sich üblicherweise um Zusteller oder Händler, die Gegenstände in freie Fächer der Schließfachanlage einstellen. Dabei kann es an einer Schließfachanlage ebenfalls zu verschiedenen Vorgängen kommen. Insbesondere in Postversandsystemen, die als eine alternative Zustelladresse Paketfachanlagen nutzen, ist es üblich, dass Postsendungen direkt an eine Paketfachanlage adressiert werden können. Die Zielinformationen dieser Sendungen werden zuvor in einem Postverteilzentrum erfasst und die Sendungen anhand der Zielinformation sortiert und zur entsprechenden Zustellbasis transportiert. Daraufhin werden die Sendungen einem Zusteller übergeben, der die Sendung(en) zu der betreffenden Paketfachanlage transportiert und jeweils eine Sendung in ein freies Fach der Paketfachanlage einstellt.

Ferner können Sendungen in eine Paketfachanlage eingestellt werden, die zwar ursprünglich an die Heimadresse eines Empfängers adressiert waren, zu denen jedoch eine Umleitungsverfügung ermittelt wurde, die eine Zustellung an einer bestimmten Paketfachanlage vorsieht. In einem weiteren Fall transportiert ein Zusteller eine Postsendung zur Heimadresse eines Empfängers, stellt jedoch dort fest, dass der Empfänger nicht anzutreffen ist und hinterlässt daraufhin beim Empfänger eine Benachrichtigung, dass seine Postsendung stattdessen in eine Paketfachanlage eingestellt werden wird. Der Zusteller transportiert die Sendung nun zu der ausgewählten Paketfachanlage und stellt sie ebenfalls in ein freies Fach der Anlage ein.

Um Kapazitäten von Paketfachanlagen möglichst gut ausnutzen zu können, kann es in einer weiteren Nutzungsform einer solchen Anlage vorgesehen sein, dass nicht nur Postsendungen in einer Paketfachanlage eingestellt werden können, sondern dass verbleibende freie Fächer auch von Händlern zur Einstellung beziehungsweise Anlieferung von Warensendungen genutzt werden können.

Beispielsweise offenbart die internationale Patentanmeldung WO 01/31593 A1 ein Liefersystem, bei dem vorzugsweise über das Internet bestellte Waren in einer Schließfachanlage eingestellt und von Empfängern aus dieser entnommen werden können. Das System kann von mehreren Händlern, Zustellunternehmen und Empfängern von Waren genutzt werden.

Wird derartig vielen Benutzergruppen der Zugriff auf eine oder mehrere Schließfachanlagen erlaubt, ist es erforderlich, die Kapazitäten der jeweiligen Schließfachanlage geeignet zu verteilen. Dabei kann es beispielsweise vorgesehen sein, dass nach der Bestellung einer Ware über das Internet ein bestimmtes Fach einer Schließfachanlage für die Anlieferung dieser Ware reserviert wird. Diese Reservierung erfolgt üblicherweise über eine zentrale Datenverarbeitungseinheit, die in Verbindung mit der Schließfachanlage steht und über Informationen über die Belegzustände der Fächer der Anlage verfügt. Für eine bestellte Ware ist so gewährleistet, dass ein Fach für die Anlieferung zur Verfügung steht und den Benutzergruppen anderer Zustellwege lediglich die verbleibenden Fächer zur Verfügung stehen.

Diese Vorgehensweise eignet sich jedoch üblicherweise nicht für die Zustellung von Postsendungen, da entweder der Absender oder der Empfänger der Postsendung bereits beim Versand der Sendung ein Fach reservieren müsste. Beim Postversand ist es daher üblich, anhand von statistischen Erfahrungswerten die voraussichtliche Anzahl von Postsendungen, die an einem Tag in eine Paketfachanlage eingestellt werden, zu bestimmen und die entsprechende Anzahl von Fächern zu reservieren. In diesem Fall stehen den Benutzergruppen der anderen Zustellwege ebenfalls nur die verbleibenden Fächer zur Verfügung.

In der Praxis hat sich gezeigt, dass diese Art der Kapazitätsplanung nur sehr ungenau ist und keine optimale Auslastung einer Schließfachanlage gewährleistet.

Aufgabe der Erfindung ist es daher, ein Verfahren zum Betreiben einer Paketfachanlage bereitzustellen, bei dem wenigstens zwei Benutzergruppen Zugriff auf freie Fächer der Paketfachanlage haben und eine verbesserte Auslastung der Paketfachanlage erreicht wird. Insbesondere haben die Benutzergruppen Zugriff auf Fächer unterschiedlicher Größe in der Paketfachanlage.

Aufgabe der Erfindung ist es ferner, eine Anordnung von Vorrichtungen zur Durchführung des Verfahrens bereitzustellen.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-7. Die Aufgabe wird ferner durch eine Anordnung von Vorrichtungen nach Anspruch 8 gelöst.

Bei dem erfindungsgemäßen Verfahren zum Betreiben wenigstens einer elektronischen Paketfachanlage, umfassend mehrere Fächer der Anzahl F, werden Postsendungen von wenigstens zwei Benutzergruppen A und B mit unterschiedlichen Zugriffsrechten in die Fächer der Paketfachanlage eingestellt. Dabei steht die Paketfachanlage in Verbindung mit einer zentralen Datenverarbeitungseinheit und die Belegzustände der Fächer der Paketfachanlage werden an die Datenverarbeitungseinheit übermittelt, so dass in einem Speichermittel der Datenverarbeitungseinheit die Anzahl Y an freien Fächern unterschiedlicher Größe der Paketfachanlage hinterlegt ist. Die zentrale Datenverarbeitungseinheit steht ferner in Verbindung mit wenigstens einem Postverteilzentrum, in dem Zielinformationen von Postsendungen erfasst werden, wobei der Paketfachanlage ebenfalls eine Zielinformation zugeordnet ist.

Die Erfindung sieht vor, dass ein Zeitraum Z zwischen einem Start-Zeitpunkt und einem End-Zeitpunkt festgelegt und der Zeitraum in einem Datenverarbeitungsmittel des Postverteilzentrums hinterlegt wird. Zielinformationen und Größen von Postsendungen werden im Postverteilzentrum mit einem Datenerfassungsgerät erfasst, und durch das Datenverarbeitungsmittel des Postverteilzentrums wird die Anzahl X der Postsendungen bestimmt, deren im Zeitraum Z erfasste Zielinformation mit der Zielinformation der Paketfachanlage übereinstimmt. Diese Anzahl X wird daraufhin von dem Datenverarbeitungsmittel des Postverteilzentrums an die zentrale Datenverarbeitungseinheit übermittelt. Die zentrale Datenverarbeitungseinheit führt einen Vergleich der Anzahl X mit der Anzahl Y an freien Fächern der Paketfachanlage durch. Falls Y ≥ X ist, erfolgt eine Zuordnung von X freien Fächern der Paketfachanlage zu einer ersten Benutzergruppe A durch die zentrale Datenverarbeitungseinheit. Ein Steuerbefehl für eine Reservierung der zugeordneten X freien Fächer der Paketfachanlage für die erste Benutzergruppe A wird von der Datenverarbeitungseinheit an eine Steuereinheit der Paketfachanlage übermittelt.

Ferner erfolgt eine Subtraktion der Anzahl X an reservierten Fächern von der Anzahl Y an freien Fächern zur Bestimmung der Anzahl V der verbleibenden verfügbaren Fächer in der Paketfachanlage durch die zentrale Datenverarbeitungseinheit. Falls dieser Rechenvorgang ergibt, dass V > 1 ist, erfolgt eine Zuordnung wenigstens eines Teils der verbleibenden verfügbaren Fächer V zu einer zweiten Benutzergruppe B durch die zentrale Datenverarbeitungseinheit. Es wird ebenfalls ein Steuerbefehl für eine Reservierung der zugeordneten Fächer für die zweite Benutzergruppe B von der Datenverarbeitungseinheit an die Steuereinheit der Paketfachanlage übermittelt.

In einem weiteren Schritt des erfindungsgemäßen Verfahrens erfolgt eine Erfassung von Benutzeridentifikationen und/oder Sendungsinformationen durch eine Benutzerschnittstelle an der Paketfachanlage und eine Zuordnung eines Benutzers und/oder einer Postsendung zu den Benutzergruppen A oder B anhand der erfassten Benutzerinformationen und/oder Sendungsinformationen durch die Steuereinheit der Paketfachanlage. Durch die Steuereinheit der Paketfachanlage wird der Zugriff auf freie Fächer der Paketfachanlage anhand der für die beiden Benutzergruppen A und B durchgeführten Reservierungen gesteuert. Ferner wird ein Zeitpunkt P durch die Steuereinheit der Paketfachanlage bestimmt. Nach dem Zeitpunkt P erfolgt eine Aufhebung der Reservierungen von Fächern für die Benutzergruppen A und B durch die Steuereinheit und eine Freigabe des Zugriffs auf freie Fächer der Paketfachanlage für alle Benutzergruppen durch die Steuereinheit.

In einem besonders bevorzugten Ausführungsbeispiel der Erfindung sind Postsendungen von drei Benutzergruppen A, B und C in die Fächer der Paketfachanlage einstellbar, und es erfolgt eine Zuordnung eines ersten Teils der verbleibenden verfügbaren Fächer V zu einer zweiten Benutzergruppe B, während eine Zuordnung eines zweiten Teils der verbleibenden verfügbaren Fächer V zu einer dritten Benutzergruppe C erfolgt. Dabei können die verbleibenden verfügbaren Fächer V zu gleichen oder ungleichen Teilen den Benutzergruppen B und C zugeordnet werden.

In einem Ausführungsbeispiel der Erfindung ist der Zeitpunkt P fest in der Steuereinheit der Paketfachanlage hinterlegt. Alternativ kann der Zeitpunkt P variabel in Abhängigkeit von unterschiedlichen Parametern festgelegt werden. In beiden Fällen kann der Zeitpunkt P beispielsweise von der zentralen Datenverarbeitungseinheit festgelegt und an die Steuereinheit der Paketfachanlage übermittelt werden.

Von der Erfindung umfasst ist ferner eine Anordnung von Vorrichtungen zum Betreiben wenigstens einer elektronischen Paketfachanlage mit Mitteln zur Durchführung des erfindungsgemäßen Verfahrens.

Der Vorteil der Erfindung liegt in der verbesserten Auslastung einer Paketfachanlage. Durch die Übermittlung der freien Fächer der Paketfachanlage an die zentrale Datenverarbeitungseinheit und die Erfassung von Sendungsinformationen in einem Postverteilzentrum steht zu einem sehr frühen Zeitpunkt im Laufe des Transport- und Zustellprozesses einer Postsendung fest, ob für eine Postsendung ein freies Fach zur Verfügung steht. Ferner kann eine genaue Reservierung von Fächern für direkt an die Paketfachanlage adressierte Sendungen erfolgen. Dies ist wesentlich genauer als eine statistische Prognose aufgrund von Erfahrungswerten, so dass nur so viele Fächer reserviert werden, wie auch wirklich benötigt werden. Werden umgeleitete Postsendungen ebenfalls erfasst, erhöht dies nochmals die Genauigkeit der Kapazitätsplanung.

Für Postsendungen oder Warenlieferungen, die auf anderen Zustellwegen zu der Paketfachanlage gelangen können, können nach vorgegebenen Kriterien Kontingente an freien Fächern vergeben werden. Da das Aufkommen dieser Sendungen vorab nicht so genau bestimmt werden kann wie die Anzahl der direkt adressierten Postsendungen, sieht die Erfindung eine Aufhebung aller Reservierungen ab einem bestimmten Zeitpunkt vor. Wurden für eine Benutzergruppe an einem Tag zu viele Fächer reserviert, bleibt diese Reservierung somit nicht erhalten und blockiert die Einstellung anderer Sendungen, sondern ab einem bestimmten Zeitpunkt gilt das "first-come-first-served"-Prinzip, wodurch die Auslastung der Paketfachanlage erhöht werden kann.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel der erfindungsgemäßen Anordnung von Vorrichtungen; und
- Fig. 2: ein Ausführungsbeispiel für die Aufteilung eines Zustellprozesses auf zwei Postverteilzentren.

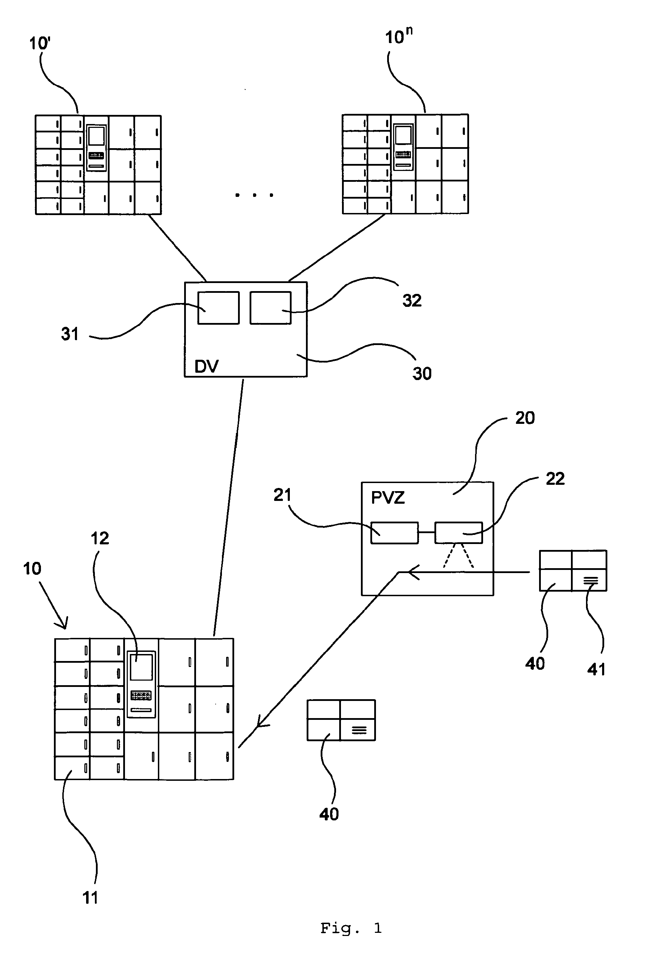

Das erfindungsgemäße Verfahren und die Anordnung von Vorrichtungen zur Durchführung des Verfahrens werden anhand des in Fig. 1 dargestellten Ausführungsbeispiels erläutert.

Die erfindungsgemäße Anordnung sieht wenigstens eine Paketfachanlage 10 vor, die mit einer zentralen Datenverarbeitungseinheit 30 in Verbindung steht. Diese Verbindung kann temporär oder permanent sein und beispielsweise über Telefon-, Internet- oder Funkverbindungen hergestellt werden. Die Datenverarbeitungseinheit 30 ist vorzugsweise entfernt von der Paketfachanlage angeordnet.

Eine Paketfachanlage ist vorzugsweise an einem öffentlich zugänglichen Ort aufgestellt und besteht aus einem Gehäuse, in dem mehrere Fächer untergebracht sind. Die Anlage kann auf verschiedene Arten ausgeführt sein. Beispielsweise kann es sich um eine übliche Fachanlage mit mehreren Fächern handeln, die jeweils mit einer eigenen Tür verschlossen sind. Eine Tür weist einen Verschließmechanismus auf, der durch eine zentrale Steuereinheit der Paketfachanlage angesteuert werden kann.

In einem anderen Ausführungsbeispiel einer Paketfachanlage arbeitete die Anlage nach dem Paternosterprinzip, bei dem jeweils eines von mehreren Aufbewahrungsfächern durch einen Transportmechanismus vor eine Öffnung verfahren werden kann, die eine verschließbare Tür aufweist. Der Verschließmechanismus der Tür steht ebenfalls in Verbindung mit einer zentralen Steuereinheit der Paketfachanlage. Ferner steuert die Steuereinheit auch die Bewegung der Aufbewahrungsfächer innerhalb der Anlage an, so dass ausgewählte Aufbewahrungsfächer vor die Öffnung verfahren werden können. In jedem Fall umfasst eine Paketfachanlage F Fächer zur Einstellung von Gegenständen wie Postsendungen.

Eine Paketfachanlage weist üblicherweise eine Benutzerschnittstelle 12 zur Interaktion mit einem jeweiligen Benutzer auf. Die Benutzerschnittstelle kann verschiedene Komponenten umfassen. Zweckmäßigerweise enthält sie wenigstens einen Bildschirm zur Anzeige von Informationen. Der Bildschirm kann auch als Touchscreen ausgebildet sein, so dass ein Benutzer über den Bildschirm Eingaben machen kann. Wird keine Touchscreen-Funktion verwendet, kann eine Tastatur zur Eingabe von Informationen vorgesehen sein. Die Benutzerschnittstelle kann ferner ein Kartenlesegerät umfassen. Mit dem Lesegerät können sowohl Kreditkarten als auch Benutzerkarten eingelesen werden. Die Kreditkartenfunktion kann beispielsweise zur Entrichtung von Nachnahmebeträgen verwendet werden. Benutzerkarten können zur Identifikation von Benutzern eingelesen werden.

Die Benutzerschnittstelle 12 steht zweckmäßigerweise in Verbindung mit der in Fig. 1 nicht dargestellten Steuereinheit der Schließfachanlage. Gibt ein Benutzer beispielsweise einen Zugangscode an der Benutzerschnittstelle ein, wird der Code geprüft, und eine positive Prüfung erzeugt ein Steuersignal, durch welches die Steuereinheit ein gewähltes beziehungsweise zugeordnetes Fach öffnet. Die Benutzerschnittstelle und die Steuereinheit stehen dazu in Verbindung mit einem in Fig. 1 ebenfalls nicht dargestellten Datenverarbeitungsmittel, das Vergleiche von Daten, Reservierungen von Fächern und die Freigabe von Fächern durchführen kann.

Vorzugsweise sind weitere Paketfachanlagen 10' bis 10ⁿ mit der zentralen Datenverarbeitungseinheit 30 verbunden. Die Datenverarbeitungseinheit umfasst wenigstens ein Speichermittel 31, in dem die Belegzustände der Fächer aller angeschlossenen Paketfachanlagen hinterlegt sind. Sobald in ein Fach einer Paketfachanlage ein Gegenstand eingestellt wird oder ein Gegenstand entnommen wird, wird diese Information über den geänderten Belegungszustand eines Faches an die zentrale Datenverarbeitungseinheit übermittelt. Dabei kann in einem ersten Ausführungsbeispiel eine genaue Zuordnung eines Belegzustandes zu einem bestimmten Fach erfolgen. In einem zweiten Ausführungsbeispiel erfolgt lediglich die Reduzierung oder Erhöhung der Anzahl von freien beziehungsweise belegten Fächern, so dass keine Zuordnung eines Belegzustandes zu einem bestimmten Fach erfolgt.

Die Übermittlung der Zustandsänderung kann sofort nach Eintreten des Ereignisses oder zu zuvor bestimmten Zeitpunkten erfolgen. In jedem Fall hat es sich als zweckmäßig erwiesen, eine möglichst zeitnahe Übermittlung der Belegzustände an die Datenverarbeitungseinheit durchzuführen, so dass die Datenverarbeitungseinheit 30 stets über die aktuellen Belegzustände aller angeschlossenen Paketfachanlagen verfügt. Bei Bedarf kann die Abfrage von Belegzuständen an einer Paketfachanlage auch zu beliebigen Zeitpunkten erfolgen. Der Datenverarbeitungseinheit steht somit zu einem bestimmten Zeitpunkt die Anzahl Y an freien Fächern der jeweiligen Paketfachanlage zur Verfügung und die Anzahl Y ist beispielsweise im Speichermittel 31 der Datenverarbeitungseinheit hinterlegt.

Die zentrale Datenverarbeitungseinheit 30 steht ferner in Verbindung mit wenigstens einem Postverteilzentrum 20. In das Postverteilzentrum werden Postsendungen 40 eines bestimmten Zustellbezirks für die Sortierung und weitere Zustellung eingeliefert, nachdem sie an Sammelstellen wie Postfilialen oder Brief- bzw. Paketkästen eingesammelt wurden. Alternativ werden diese Sendungen bei einem Versender abgeholt beziehungsweise durch diesen an das Postverteilzentrum geliefert. In dem Postverteilzentrum 20 werden mit einem Datenerfassungsmittel 22 Zielinformationen jeder durchlaufenden Postsendung erfasst.

Bei einem Datenerfassungsmittel 22 kann es sich beispielsweise um ein OCR-Lesegerät handeln, mit dem auf Postsendungen befindliche graphische Informationen erfasst und ausgewertet, sowie die Größe der Postsendungen festgestellt werden können. Sind Zielinformationen auf einer Postsendung bereits als Barcode verschlüsselt, können als Datenerfassungsmittel auch Barcodescanner eingesetzt werden.

Eine anhand ihrer Zielinformation sortierte Sendung wird daraufhin nach dem Transport an eine Zustellbasis einem Zusteller übergeben, der die Sendung zu der Paketfachanlage transportiert, der die betreffende Zielinformation zugeordnet ist. Das Datenerfassungsmittel 22 im Postverteilzentrum 20 steht ferner in Verbindung mit einem weiteren Datenverarbeitungsmittel 21, das die erfassten Zielinformationen auswertet. Die Auswertung beinhaltet insbesondere die Feststellung der Anzahl X der in einem Zeitraum Z erfassten Postsendungen, deren erfasste Zielinformation mit der Zielinformation einer betreffenden Paketfachanlage 10 übereinstimmt. Dazu wird vorher der Zeitraum Z zwischen einem Start-Zeitpunkt und einem End-Zeitpunkt festgelegt und der Zeitraum Z im Datenverarbeitungsmittel 21 hinterlegt. Bei dem Zeitraum handelt es sich üblicherweise um eine bestimmte Anzahl von Stunden eines Tages, innerhalb derer Postsendungen erfasst werden, die für die Zustellung am gleichen Tag vorgesehen sind. Das Datenverarbeitungsmittel 21 umfasst dazu ein Mittel mit Uhrfunktion.

Der Zeitraum Z kann vom Datenverarbeitungsmittel 21 des Postverteilzentrums 20 oder von der zentralen Datenverarbeitungseinheit 30 festgelegt werden. Im letzten Fall werden Informationen zur Festlegung des Zeitraums Z von der Datenverarbeitungseinheit 30 an das Datenverarbeitungsmittel 21 des Postverteilzentrums übermittelt. Im Datenverarbeitungsmittel 21 erfolgt eine Zählung aller Paketsendungen, die für die Zustellung in einer Paketfachanlage vorgesehen sind und/oder einzelne Zählungen aller Paketsendungen, die an eine jeweilige Paketfachanlage 10, 10'... 10ⁿ adressiert sind.

Bei den im Zeitraum Z erfassten Sendungen kann es sich nicht nur um direkt an die Paketfachanlage adressierte Sendungen handeln, sondern auch um Sendungen, für die im Postverteilzentrum eine entsprechende Umleitungsverfügung ermittelt wurde. Umleitungsverfügungen von Empfängern sind beispielsweise in einer Datenbank 32 der zentralen Datenverarbeitungseinheit 30 hinterlegt und können durch diese aufgerufen werden. Wird für einen Empfänger eine Umleitungsverfügung ermittelt, werden die Postsendungen entsprechend dieser neuen Zielinformation umadressiert. Schließlich wird die Anzahl X der Sendungen ermittelt, die für eine Zustellung zu einer Paketfachanlage 10 vorgesehen sind.

Die ermittelte Anzahl X wird vom Datenverarbeitungsmittel 21 des Postverteilzentrums 20 an die zentrale Datenverarbeitungseinheit 30 übermittelt. Die Datenverarbeitungseinheit führt einen Vergleich der vom Postverteilzentrum für die Zustellung der erfassten Sendungen benötigten Fächer X mit der Anzahl Y der freien Fächer der jeweiligen Paketfachanlage durch. Die aktuelle Anzahl Y liegt aufgrund einer kontinuierlichen Übertragung von Belegzuständen bereits in der Datenverarbeitungseinheit 30 vor oder wird aktuell durch eine Abfrage an der jeweiligen Paketfachanlage ermittelt.

Ergibt der Vergleich durch die Datenverarbeitungseinheit 30, dass in der Ziel-Paketfachanlage genügend freie Fächer zur Verfügung stehen, das heißt wenn Y ≥ X, wird die entsprechende Anzahl X an Fächern für eine erste Benutzergruppe A reserviert. Bei dieser ersten Benutzergruppe A handelt es sich um Zusteller, die direkt an die Paketfachanlage adressierte oder durch eine Umleitungsverfügung umadressierte Sendungen in der Anlage einliefern werden. Die Reservierung kann die feste Belegung bestimmter Fächer oder lediglich die Reservierung einer Anzahl von beliebigen Fächern der entsprechenden Größe umfassen und entsprechende Steuerbefehle werden an die Steuereinheit in der Paketfachanlage übermittelt.

Um Zusteller dieser Benutzergruppe A an der Paketfachanlage identifizieren zu können, verfügen diese beispielsweise über gesonderte Identifikationsmittel wie Zugangscodes oder Benutzerkarten. Trifft ein Zusteller an der Paketfachanlage ein, identifiziert er sich und anhand der Identifikation wird seine Zugehörigkeit zu einer Benutzergruppe ermittelt. Gehört er zur Benutzergruppe A, werden ihm eines oder mehrere der X reservierten und freien Fächer zur Einstellung seiner Sendungen bereitgestellt. Das heißt, die Steuereinheit der Paketfachanlage erlaubt den Zugriff auf fest reservierte Fächer oder eine Anzahl von beliebigen reservierten Fächern.

Von der Erfindung ist ferner eine Ausführungsform umfasst, bei der die Zuordnung eines Benutzers zu einer Benutzergruppe indirekt über eine Erfassung von Informationen von einer Postsendung erfolgt. In diesem Fall sind direkt an eine Paketfachanlage adressierte oder aufgrund einer Umleitungsverfügung an die Paketfachanlage umadressierte Postsendungen beispielsweise mit der Angabe eines Nummernkreises versehen, der die Sendung diesem speziellen Zustellweg zuordnet. Der Zusteller trifft in diesem Fall an der Paketfachanlage ein und erfasst den Nummernkreis einer Sendung. Dies kann beispielsweise über die Erfassung eines auf der Sendung befindlichen Barcodes erfolgen. Der Nummernkreis wird von der Datenverarbeitungseinheit der Paketfachanlage ausgewertet und die Postsendung kann dadurch einem bestimmten Zustellweg und damit indirekt der Benutzergruppe A zugeordnet werden, woraufhin ein für diese Benutzergruppe reserviertes Fach zur Einstellung der Sendung freigegeben wird. Gehörte die erfasste Sendungsinformation nicht zum Nummernkreis, der den reservierten Fächern der Benutzergruppe A zugeordnet ist, erhält der Zusteller keinen Zugriff auf die X reservierten Fächer.

Sobald die zentrale Datenverarbeitungseinheit 30 eine Anzahl von X Fächern zur Reservierung für die Benutzergruppe A ermittelt hat, subtrahiert ein Rechenmittel diese Anzahl X von der Anzahl Y der in der Paketfachanlage 10 zuvor verfügbaren freien Fächer. Ergibt der Rechenvorgang Y-X = V, dass in der Paketfachanlage nach der Reservierung weitere freie Fächer verfügbar sind, das heißt V > 0, wird wenigstens ein Teil dieser Anzahl V der verbleibenden freien Fächer einer zweiten Benutzergruppe B zugeordnet. Die zugeordneten Fächer werden für diese Benutzergruppe reserviert und entsprechende Steuerbefehle an die Steuereinheit in der Paketfachanlage übermittelt.

Bei der zweiten Benutzergruppe B kann es sich beispielsweise um registrierte Kunden handeln, die Sendungen in eine Paketfachanlage einstellen können, so dass diese von Mitarbeitern eines Postversandsystems abgeholt und zu einer Zieladresse transportiert wird. Dabei kann es sich beispielsweise um Retourensendungen von ursprünglichen Empfängern oder neu zu verschickende und frankierte Sendungen handeln. Trifft ein Kunde der Benutzergruppe B an der Paketfachanlage ein, identifiziert er sich selbst oder die einzustellende Postsendung an der Benutzerschnittstelle, so dass von der Datenverarbeitungseinheit der Paketfachanlage ermittelt werden kann, welcher Benutzergruppe der Benutzer beziehungsweise die Postsendung zugeordnet ist. Stehen der Benutzergruppe B reservierte Fächer zur Verfügung, wird dem Kunden der Zugriff auf ein freies Fach gewährt. Die Zuordnung zur Benutzergruppe B kann ebenfalls über eine Identifikation des Kunden oder die Erfassung von Sendungsdaten erfolgen. Beispielsweise können einzustellende Sendungen von einem Kunden mit einem Retouren- oder Versandlabel versehen werden, das einen Barcode aus einem bestimmten Nummernkreis aufweist. Solche Sendungen werden üblicherweise zuvor nicht in einem Postverteilzentrum erfasst. Es kann jedoch vorgesehen sein, dass ein Versender seine Sendung vorab bei der zentralen Datenverarbeitungseinheit anmelden kann. Dies kann beispielsweise über das Internet erfolgen, so dass die Datenverarbeitungseinheit diese Informationen für eine Prognose der zu erwartenden Sendungen verwenden kann. In Abhängigkeit von diesen Vorabinformationen kann beispielsweise der Anteil an freien Fächern bestimmt werden, welcher für die Benutzergruppe B reserviert wird.

Bei der Benutzergruppe B kann es sich ferner um Händler handeln, die Fächer der postalischen Paketfachanlage zur Einstellung von bestellten Waren für ihre Kunden verwenden dürfen. Diese Waren werden üblicherweise zuvor nicht in einem Postverteilzentrum erfasst, sondern gelangen auf separaten Logistikwegen zur Paketfachanlage. Es besteht jedoch die Möglichkeit, dass Händler ebenfalls über Informationen über freie Fächer der Paketfachanlagen verfügen und Reservierungen durchführen können. Auch diese Sendungen können durch eigene Nummernkreise oder die entsprechende Identifikation der Zusteller des jeweiligen Händlers kategorisiert und an der Paketfachanlage erkannt werden.

Bei der Benutzergruppe B kann es sich ferner um Zusteller handeln, welche zuvor die Zustellung einer Postsendung an der Heimadresse eines Empfängers versucht haben. Ist ein Empfänger jedoch nicht an seiner Heimadresse anzutreffen, hinterlässt der Zusteller eine Benachrichtigungskarte beim Empfänger, auf der die Paketfachanlage angegeben ist, in welcher der Zusteller die Postsendung stattdessen deponieren wird. Dem Zusteller können dazu über ein Handheld Informationen über die aktuellen Belegzustände und Reservierungen jeder Paketfachanlage bereitgestellt werden. Die Informationen über freie und/oder reservierte Fächer können von jeder Paketfachanlage selbst oder der zentralen Datenverarbeitungseinheit 30 bereitgestellt werden. Bei dieser Abfrage erfolgt zweckmäßigerweise ebenfalls eine Zuordnung des Zustellers zu seiner Benutzergruppe, so dass ermittelt werden kann, ob für diese Benutzergruppe in einer Paketfachanlage freie Fächer zur Verfügung stehen, das heißt reserviert wurden. Beispielsweise kann es der Fall sein, dass in einer vom Zusteller ausgewählten Paketfachanlage zwar freie Fächer verfügbar sind, diese jedoch für diesen Tag vollständig für direkt adressierte oder umgeleitete Sendungen der Benutzergruppe A reserviert sind. Oder das Kontingent an Fächern, das für die Benutzergruppe dieses Zustellers reserviert wurde, wurde bereits von anderen Zustellern ausgeschöpft.

In einem Ausführungsbeispiel der Erfindung erfolgt dabei eine Reservierung eines Faches für den Zusteller durch das Handheld des Zustellers. Dazu verbindet sich das Handheld entweder mit der ausgewählten Paketfachanlage oder der zentralen Datenverarbeitungseinheit 30 und eine Reservierung wird durchgeführt. Sind insgesamt für die Benutzergruppe B beispielsweise zehn Fächer reserviert, wird ein Fach speziell für die Zustellung dieses benachrichtigten Pakets reserviert und das Fach kann in der Zwischenzeit nicht an andere Benutzer der Benutzergruppe B vergeben werden.

Der Zusteller ermittelt somit eine Paketfachanlage mit freien Kapazitäten für seine Benutzergruppe und stellt die Sendung in die betreffende Anlage ein. Dabei identifiziert er sich selbst oder die Postsendung an der Benutzerschnittstelle der Paketfachanlage, woraufhin eine Zuordnung des Zustellers zu einer Benutzergruppe erfolgen kann. Dem Zusteller werden daraufhin freie Fächer seiner Benutzergruppe zur Verfügung gestellt. Üblicherweise umfasst die beim Empfänger hinterlassene Benachrichtigungskarte neben der Angabe der Paketfachanlage auch einen Zugangscode, mit welchem die Sendung vom Empfänger abgeholt werden kann.

In den beschriebenen Ausführungsbeispielen werden freie Fächer einer Paketfachanlage somit auf zwei Benutzergruppen A und B verteilt. Für direkt adressierte und umadressierte Sendungen, die in einem Postverteilzentrum erfasst wurden, werden der Benutzergruppe A alle erforderlichen Fächer reserviert. Die verbleibenden freien Fächer stehen allen anderen Zustellern zur Verfügung.

In einem weiteren Ausführungsbeispiel der Erfindung wird die Anzahl V der freien Fächer, die nach einer Reservierung der X freien Fächer für die im Postverteilzentrum erfassten Postsendungen übrig bleiben, auf wenigstens zwei weitere Benutzergruppen B und C verteilt. Beispielsweise gehören Händler weiter zur Benutzergruppe B, Zusteller von an einer Empfängeradresse nicht zustellbaren Postsendungen jedoch zur Benutzergruppe C. Jede weitere Unterteilung von Benutzern mit unterschiedlichen Prioritäten bei der Bereitstellung von Fächern kann berücksichtigt werden.

Die verbleibenden verfügbaren Fächer V werden somit nach einem vorgegebenen Schema auf die möglichen Benutzergruppen verteilt und entsprechende Reservierungen von Fächern vorgenommen. Das Verteilungsschema kann beispielsweise vorsehen, dass für jede Benutzergruppe in etwa die gleiche Anzahl an Fächern reserviert wird. In einem anderen Ausführungsbeispiel der Erfindung werden einzelne Benutzergruppen bevorzugt, so dass eine ungleichmäßige Reservierung von verfügbaren Fächern erfolgt.

In Fig. 1 ist nur ein Postverteilzentrum 20 dargestellt. Vorzugsweise sind in einem Postversandsystem jedoch mehrere Postverteilzentren vorgesehen, welche geographisch den gesamten Bereich des Posttransport- und Verteilsystems abdecken.

Eine Postsendung kann daher bei ihrer Zustellung mehrere Postverteilzentren durchlaufen. Um Kapazitäten zu planen und Reservierungen durchzuführen, können Sendungsinformationen an verschiedenen Stationen ermittelt und geeignet genutzt werden.

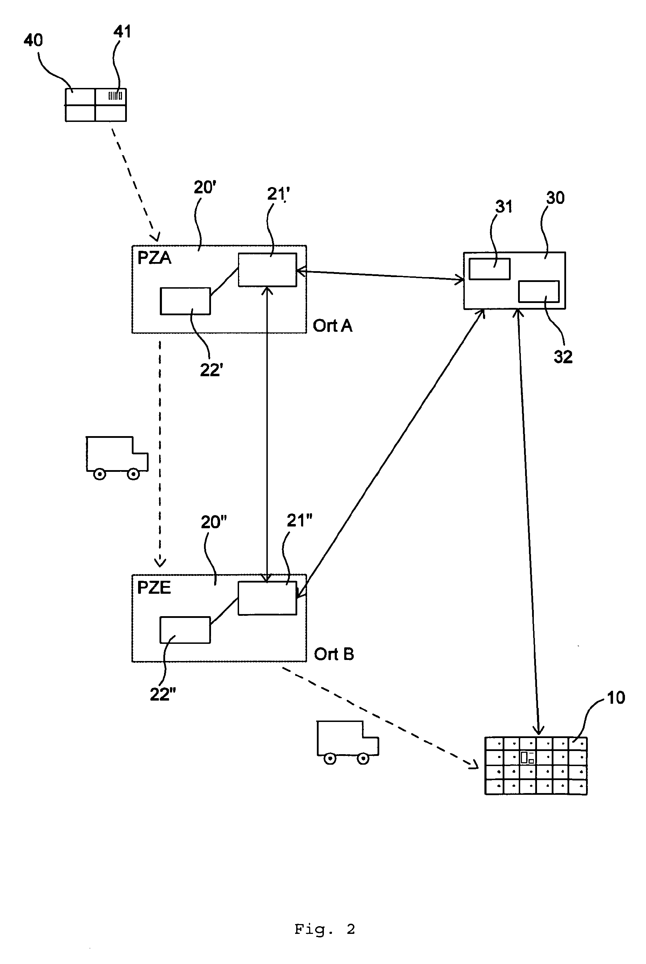

Dabei kann ein Postverteilzentrum typischerweise sowohl als so genanntes Posteingangszentrum PZE als auch als Postausgangszentrum PZA fungieren. Eine solche Anordnung von Postverteilzentren ist schematisch in Fig. 2 dargestellt. Wird eine Postsendung an einem Ort A von einem Kunden aufgegeben und soll an einer Zieladresse am Ort B zugestellt werden, stellt das Postverteilzentrum 20' in der Nähe des Ortes A das Postausgangszentrum dar, während ein Postverteilzentrum 20" am Ort B das Posteingangszentrum darstellt. Wird eine Sendung dagegen am Ort B aufgegeben und soll am Ort A zugestellt werden, fungiert das Postverteilzentrum 20" in der Nähe des Ortes B als Postausgangszentrum, während das Postverteilzentrum 20' am Ort A das Posteingangszentrum darstellt.

Üblicherweise werden in einem Postverteilzentrum, das als Postausgangszentrum PZA fungiert, die Zieleinformationen von jeder Postsendung durch wenigstens ein Datenerfassungsmittel erfasst und die Sendungen anhand der erfassten Zielinformationen verschiedenen Zustellbereichen zusortiert. Eine Sendung wird daraufhin zu einem zweiten Postverteilzentrum in dem betreffenden Zustellbereich transportiert, das dann als Posteingangszentrum dient.

Beispielsweise erfolgt in einem Postausgangszentrum eine Grobsortierung von eingegangenen Postsendungen nach Zielorten von Postverteilzentren. Sortierte Sendungen werden zu den verschiedenen Ziel-Postverteilzentren transportiert und dort beispielsweise nach Adressen und Hausnummern feinsortiert. Die feinsortierten Sendungen werden einem Zusteller für eine bestimmte Zustelltour übergeben. Jedes Postverteilzentrum agiert somit sowohl als Postausgangszentrum, indem es eingelieferte Sendungen an andere Postverteilzentren verteilt und als Posteingangszentrum, indem es von anderen Postverteilzentren erhaltene Sendungen für die Zustellung sortiert.

In einem Ausführungsbeispiel der Erfindung ist es vorgesehen, dass in einem Postausgangszentrum andere Daten erfasst werden als in einem Ziel-Posteingangszentrum, oder bereits erfasste Daten im PZE nur nochmals bestätigt werden. Zusätzlich erfolgt jedoch eine Übertragung von Daten zwischen den beiden Postverteilzentren.

Die Aufteilung von verschiedenen Schritten bei der Verarbeitung von Zielinformationen von Postsendungen durch zwei Postverteilzentren 20' und 20" wird beispielhaft anhand von Fig. 2 beschrieben. Die in Fig. 2 dargestellten Vorrichtungen innerhalb der Postverteilzentren können jedoch sowohl die Verfahrensschritte bei der Einlieferung einer Postsendung als auch bei der Auslieferung einer Postsendung durchführen. Werden Sendungen daher am Ort B eingeliefert, wird das dort angesiedelte Postverteilzentrum 20" zum Postausgangszentrum, und die Funktionen der in Fig. 2 dargestellten Komponenten und Verbindungen ändern sich entsprechend.

In dem in Fig. 2 dargestellten Ausführungsbeispiel ist eine Postsendung 40 mit einer eindeutigen Sendungsidentifikation 41 versehen. Vorzugsweise handelt es sich bei der Sendungsidentifikation 41 um eine Adresse in Klarschrift und/oder wenigstens einen Barcode, in dem Angaben verschlüsselt sind, welche die Postsendung eindeutig im System identifizieren.

Statt eines Barcodes können auch dreidimensionale Verschlüsselungsmatrizen oder Angaben in Klarschrift genutzt werden, um die Sendung eindeutig zu identifizieren. Möglich ist auch die Kennzeichnung einer Sendung durch einen RFID-Transponder.

Typischerweise handelt es sich bei der Postsendung 40 um eine Paketsendung, die aufgrund ihrer Abmessungen nicht in einen Briefkasten eines Empfängers eingeworfen werden kann, so dass der Empfänger die Zustellung in einer elektronischen Paketfachanlage 10 wählen kann. Der Kunde kann jedoch auch für andere Postsendungen wie Briefe, Bücher- oder Warensendungen eine Zustellung in einer Paketfachanlage wählen, so dass die Erfindung nicht auf die Bearbeitung von Paketsendungen beschränkt ist. So ist es beispielsweise möglich, dass sich ein Kunde Sendungen an beliebige Paketfachanlagen schicken lassen kann, in deren Nähe er beispielsweise beruflich unterwegs ist oder Urlaub macht.

Zweckmäßigerweise befindet sich im Bereich eines jeden Postverteilzentrums wenigstens eine Paketfachanlage. Vorteilhafter ist jedoch die Anordnung mehrerer Paketfachanlagen im Bereich eines Postverteilzentrums beziehungsweise einer Stadt, um dem Kunden möglichst viele Orte für eine mögliche Zustellung bereitzustellen.

Paketfachanlagen können üblicherweise von registrierten und/oder nicht-registrierten Empfängern von Sendungen genutzt werden. Sollen bei der Zustellung von einem Empfänger hinterlegte Umleitungsverfügungen berücksichtigt werden, hat es sich als vorteilhaft erwiesen, dass ein Kunde registriert ist.

Werden Pakete innerhalb des Systems transportiert und zugestellt, befindet sich die Zielinformation 41 beispielsweise auf einem Label, das auf das Paket aufgebracht ist. Das Label kann von einem Versender selbst, von einer Postannahmestelle und in einzelnen Fällen auch von einem Postverteilzentrum auf die Sendung aufgebracht worden sein. Ein Barcode auf dem Label dient zur eindeutigen Identifizierung der Sendung und ermöglicht somit insbesondere eine Verfolgung der Sendung im System.

Nach der Aufnahme einer Postsendung 40 in das Posttransport-und Postverteilsystem wird die Sendung einem ersten Postverteilzentrum 20' übergeben, das nun für diese Sendung als Postausgangszentrum fungiert. In dem Postausgangszentrum werden mittels einer Lesevorrichtung 22' Zielinformationen auf der Sendung eingelesen. Ferner werden Informationen eingelesen, welche die Sendung im System eindeutig identifizieren. Diese Informationen werden im Folgenden auch als Paket-ID bezeichnet. Die Paket-ID kann sich bereits auf der Sendung befinden oder sie wird von dem Datenverarbeitungsmittel 21' des Postverteilzentrums 20' erzeugt und auf die Sendung aufgebracht. Es kann sich beispielsweise um einen Barcode handeln, der auf die Sendung aufgedruckt wird.

Bei der Lesevorrichtung 22' handelt es sich beispielsweise um ein Paketanschriftenlesesystem, oder einzelne Bearbeitungsstellen in einem Postverteilzentrum lesen Informationen von Sendungen ein und übermitteln diese an einen zentralen Rechner im Postverteilzentrum. Wird zur Identifizierung einer Sendung ein Barcode verwendet, werden die Informationen mit einem Scanner eingelesen. Wird dagegen ein RFID-Transponder verwendet, werden die darin hinterlegten Informationen mittels einer zugehörigen Leseeinrichtung erfasst.

Ferner können von der Lesevorrichtung 22' Angaben zu dem Empfänger der Sendung ermittelt werden. Diese Angaben können beispielsweise durch OCR-Lesegeräte erfasst und durch die Datenverarbeitungseinheit 21' verarbeitet werden. In einem Ausführungsbeispiel der Erfindung ist auf die Sendung eine Empfänger-Kennung aufgebracht, welche von der Leseeinrichtung maschinell eingelesen werden kann. Dabei handelt es sich beispielsweise um eine Kunden-ID des Empfängers, der im System registriert ist.

Die Kunden-ID kann ebenfalls verschlüsselt oder in Klarschrift auf der Sendung aufgebracht sein. Beispielsweise wurde die Kunden-ID von einem Empfänger beim Bestellen einer Warensendung angegeben, so dass der Versender die Kunden-ID beim Versand im Bereich des Adressfeldes auf die Sendung aufbringen kann. Ist keine Kunden-ID aufgebracht, kann beispielsweise der Kundenname und die Kundenanschrift eingelesen werden, die in Klarschrift auf der Sendung vermerkt sind. Darüber hinaus werden weitere Adressinformationen wie Straße, Hausnummer, Postleitzahl oder die Abmessungen einer Sendung erfasst und von verschiedenen Systemen verarbeitet.

Die ermittelte oder erzeugte Paket-ID wird zusammen mit den Angaben zu dem Empfänger an die Datenverarbeitungseinheit 30 in Verbindung mit dem Postausgangszentrum 20' übermittelt. Die Datenverarbeitungseinheit hat Zugriff auf eine Kundendatenbank 32, in welcher Umleitungsverfügungen gespeichert sind, welche von Kunden erlassen wurden.

Die Datenverarbeitungseinheit 30 stellt eine Anfrage an die Datenbank 32, ob für die erfasste Kunden-ID eine Umleitungsverfügung hinterlegt ist. Dabei handelt es sich vorzugsweise um eine Verfügung, dass eine Postsendung an einer vom Kunden gewählten Paketfachanlage zugestellt werden soll. Dabei können vom Kunden verschiedene Zustellroutinen hinterlegt werden, so dass er für verschiedene Zeiträume verschiedene Paketfachanlagen angeben kann.

Ist die Postsendung ursprünglich an die Hausadresse des Kunden adressiert, erfolgt nun eine Umleitung der Sendung zu einer Paketfachanlage. Auch wenn die Sendung zuvor bereits an eine Paketfachanlage adressiert war, kann eine Umleitung an eine andere Paketfachanlage erfolgen, falls der Kunde dies hinterlegt hat.

Bei der Umleitung der Sendung können ferner die aktuellen Kapazitäten von Paketfachanlagen berücksichtigt werden, indem die Datenverarbeitungseinheit 30 auf das Speichermittel 31 zugreift, in dem die Belegzustände aller Paketfachanlagen hinterlegt sind. Hat der Kunde eine Paketfachanlage ausgewählt, dem System ist jedoch bekannt, dass in der betreffenden Paketfachanlage keine freien Fächer verfügbar sind, kann beispielsweise eine alternative Paketfachanlage mit verfügbaren Fächern ausgewählt werden.

Aus der Umleitungsverfügung des Kunden mit der eingelesenen Kunden-ID wird eine Zielangabe ermittelt, und diese Zielangabe wird der eindeutigen Identifikation (Paket-ID) der Sendung zugeordnet. Der Sendung wird ferner das Postverteilzentrum zugeordnet, in dessen Bereich sich die Zielangabe und damit die elektronische Paketfachanlage befindet, zu welcher die Sendung umgeleitet werden soll.

Das Postverteilzentrum 20" agiert nun für diese Sendung als Posteingangszentrum. Die Sendung wird mit Transportmitteln wie beispielsweise Zügen oder Kraftfahrzeugen zu dem betreffenden Posteingangszentrum 20" transportiert und dort angenommen. Ferner ordnet die Datenverarbeitungseinheit 21' des Postausgangszentrums 20' der Zielangabe die zugehörige Paket-ID der Sendung zu. Über eine Datenleitung werden wenigstens die Zielangabe und die Paket-ID an eine entsprechende Datenverarbeitungseinheit 21" in Verbindung mit dem Ziel-Posteingangszentrum 20" übermittelt. Es kann ferner vorgesehen sein, dass weitere Informationen wie Straße, Hausnummer, Postleitzahl oder die Abmessungen der Sendung ebenfalls an die Datenverarbeitungseinheit 21" des Posteingangszentrums 20" übermittelt werden.

Wird die Paket-ID der Sendung im Posteingangszentrum 20" erneut durch eine Leseeinrichtung 22'' erfasst, wird der Sendung durch die Datenverarbeitungseinheit 21' die zugehörige Zielangabe zugeordnet und die Sendung anhand dieser Zielangabe so sortiert, dass sie einem Zustellbezirk und einem Zusteller zugeteilt wird, in dem sich die betreffende Paketfachanlage 10 befindet.

Auch für den Fall, dass ein Empfänger für verschiedene Zeiträume die Zustellung zu verschiedenen Paketfachanlagen vorgesehen hat, besteht die Möglichkeit, dass sich die Zielangabe einer Sendung nach der ersten Umadressierung nochmals ändert. Zweckmäßigerweise führt die Datenverarbeitungseinheit 21" im Posteingangszentrum nach der Erfassung der Paket-ID erneut eine Abfrage in der Datenbank 32 der zentralen Verwaltungseinheit 30 durch, um die aktuellen Vorgaben für eine Umleitung abzufragen. Wurde der Transport der Postsendung vom Postausgangszentrum zum Posteingangszentrum beispielsweise verzögert, kann der Fall eintreten, dass ein bestimmtes Zeitfenster überschritten ist und der Empfänger nun eine Zustellung in einer anderen Paketfachanlage wünscht. In diesem Fall wird die Sendung erneut umgeleitet.

Die Bestimmung der Anzahl X der in einem festgelegten Zeitraum Z erfassten Postsendungen, deren Zielangabe mit der Paketfachanlage übereinstimmt, kann im ersten Postausgangszentrum 20' oder im zweiten Posteingangszentrum 20' erfolgen. Ferner kann der Zeitraum Z entsprechend so gewählt werden, dass Sendungen in einem frühen oder späten Stadium im Laufe des Zustellprozesses gezählt werden. Soll die Anzahl der an einem Tag für eine Paketfachanlage vorgesehenen Sendungen möglichst genau gezählt werden, wird der Zeitraum Z so gewählt, dass alle direkt adressierten und alle umgeleiteten Sendungen gezählt werden. Dazu können auch die Sendungen zählen, die nach einer nochmaligen Überprüfung im Posteingangszentrum nochmals zu einem sehr späten Zeitpunkt umadressiert werden.

Der Zusteller transportiert die Sendung 40 zu der Paketfachanlage 10 und stellt die Sendung dort in ein freies Fach ein. Die Benachrichtigung des Kunden über die Einstellung kann ebenfalls über die zentrale Verwaltungseinheit 30 erfolgen, sobald dieser Verwaltungseinheit von der Paketfachanlage 10 die Information übermittelt wird, dass eine Sendung eingestellt wurde. Die Benachrichtigung des Kunden erfolgt beispielsweise über E-Mail oder SMS.

In einem Ausführungsbeispiel der Erfindung wurde dem Kunden bereits vor der Einstellung der Sendung eine Vorabnachricht übermittelt, dass die Sendung in nächster Zeit in eine Paketfachanlage eingestellt wird. Diese Vorabnachricht kann beispielsweise ausgelöst werden, sobald der Sendung im Postausgangszentrum eine Zielangabe in Form einer Paketfachanlage zugeordnet wurde. Da zu diesem Zeitpunkt noch nicht sichergestellt ist, dass eine Sendung das jeweilige Posteingangszentrum überhaupt erreicht, kann es vorteilhaft sein, die Vorabnachricht erst an den Kunden zu senden, wenn die Sendung im Posteingangszentrum erneut erfasst wird. Nach der Einstellung der Sendung erhält der Kunde eine Bestätigungsnachricht, dass seine Sendung tatsächlich eingestellt wurde.

Ist es vorgesehen, dass sich die Zielangabe für eine Sendungsumleitung im Laufe des Transport- und Verteilwegs einer Sendung ändern kann, können dem Kunden mehrere Vorabnachrichten über die voraussichtliche Einstellung seiner Sendung übermittelt werden. Beispielsweise kann die zentrale Verwaltungseinheit 30 von einem Kunden eine einmalige Verfügung erhalten, dass eine Sendung umgeleitet werden soll, auch wenn die Sendung bereits im Postausgangszentrum erfasst und sich gegebenenfalls sogar schon auf dem Transportweg zu einem Posteingangszentrum befindet. Die erneute Umleitungsverfügung wird von der zentralen Verwaltungseinheit an die Datenverarbeitungseinheit 21" des Posteingangszentrums 20" übermittelt. Sobald die Paket-ID der Sendung im Posteingangszentrum eingelesen wird, wird der Sendung die neue Zielangabe zugeordnet und die Sendung wird entsprechend sortiert.

Erfolgte bereits die Reservierung eines Faches in einer Paketfachanlage, wird diese Reservierung aufgehoben und möglichst ein Fach in der neu festgelegten Paketfachanlage reserviert. Stellt sich heraus, dass in der neu vom Kunden festgelegten Paketfachanlage keine freien Fächer verfügbar sind, wird zweckmäßigerweise keine erneute Umadressierung der Sendung vorgenommen, und der Kunde wird darüber benachrichtigt.

Die wiederholte Umadressierung einer Sendung kann zu Paketfachanlagen im Bereich des zuerst bestimmten Posteingangszentrums oder außerhalb dessen Bereiches erfolgen. Bei einer Umadressierung innerhalb des Bereiches des Posteingangszentrums erfolgt lediglich die Zuordnung zu einer neuen Paketfachanlage und die Sendung wird einer anderen Zustelltour zusortiert. Soll eine Umadressierung der Sendung außerhalb des Posteingangszentrums erfolgen, weil der Kunde beispielsweise die Zustellung in einer anderen größeren Stadt wünscht, wird das betreffende Postverteilzentrum dieser Stadt ermittelt und die Sendung zu diesem Postverteilzentrum transportiert. Das neu bestimmte Postverteilzentrum fungiert nun als Posteingangszentrum und die erfindungsgemäßen Verfahrensschritte können dort analog durchgeführt werden.

In einem Ausführungsbeispiel der Erfindung wird einer Paketfachanlage 10 ein Sendungsavis übermittelt, wenn in einem Postausgangszentrum 20' festgestellt wird, dass eine Postsendung für eine Paketfachanlage vorgesehen ist. Dabei kann es sich sowohl um direkt an eine Paketfachanlage adressierte Sendungen, als auch um umgeleitete Sendungen handeln. Neben der Reservierung eines Faches für eine bestimmte Benutzergruppe erfolgt somit auch eine Übermittlung von sendungsspezifischen Daten an die Paketfachanlage. Die im Postausgangszentrum 20' erfassten Daten wie Kunden-ID, Paket-ID, Straße, Hausnummer, Postleitzahl und/oder Abmessungen der Sendung werden der betreffenden Paketfachanlage 10 direkt oder über die zentrale Verwaltungseinheit 30 übermittelt und in einem Speichermittel der Paketfachanlage hinterlegt. Bei Einstellung einer Sendung in der Schließfachanlage wird die Paket-ID erfasst und der zugehörige Datensatz aufgerufen.

Beispielsweise scannt der Zusteller den Barcode einer Sendung ein und es wird ermittelt, ob für den Zusteller beziehungsweise die Sendung ein freies Fach reserviert wurde. Ist dies der Fall, erkennt der Automat die Sendung anhand der Paket-ID wieder und zeigt die relevanten Daten des Sendungsdatensatzes auf einem Bildschirm an. Zu den angezeigten Daten gehören zweckmäßigerweise wenigstens die Kunden-ID und der Name des Empfängers. Gegebenenfalls können ferner Informationen zu erforderlichen Nachnahmezahlungen angezeigt werden. Der Zusteller muss diese Daten somit nicht selber eingeben, sondern hat sie bei Deponierung einer Sendung bereits zur Verfügung und muss diese nur bestätigen. Hierdurch wird die Zustellung vereinfacht, und es ergibt sich eine wesentliche Reduktion der Zustellzeit.

Durch die mitgelieferten Abmessungen kann ermittelt werden, wie viele Fächer in welcher Größe an diesem Tag benötigt werden. Die entsprechenden Fächergrößen können für diese Sendungen reserviert werden. Zusätzlich können Sendungen, die aufgrund ihrer Abmessungen nicht in den Paketautomaten eingelegt werden können, frühzeitig identifiziert und beispielsweise in eine Filiale umgeleitet werden. Wird zum Beispiel im Postausgangszentrum festgestellt, dass eine Paketsendung an eine Paketfachanlage adressiert ist, in dieser Paketfachanlage jedoch keine Fächer mit ausreichender Größe zur Verfügung stehen, kann die Paketsendung umgeleitet werden. Die Postsendung kann an eine andere Paketfachanlage, an eine Postfiliale oder die Hausadresse des Empfängers umgeleitet werden.

Die Erfassung von Sendungsdaten kann auch im Posteingangszentrum erfolgen. Die Erfassung im Postausgangszentrum hat demgegenüber jedoch den wesentlichen Vorteil, dass die Daten zu einem möglichst frühen Zeitpunkt im System vorliegen und somit für ein Sendungsavis und eine Kapazitätsplanung verwendet werden können. Im Posteingangszentrum wird lediglich nochmals die Paket-ID erfasst und die zugehörigen Daten geladen. Somit können die Prozesse bei der Verarbeitung der Sendung im Posteingangszentrum schneller erfolgen. Die relevanten Inhalte der erfassten Daten werden dem Posteingangszentrum übermittelt und das Posteingangszentrum bestätigt lediglich, dass eine Sendung im PZE angekommen ist.

Die Erfassung von Sendungsdaten kann somit an verschiedenen Punkten im Laufe des Zustellprozesses einer direkt oder durch Umleitungsverfügung an eine Paketfachanlage adressierten Sendung erfolgen. Auch der Zustellprozess selbst kann über verschiedene Postverteilzentren erfolgen. Durch eine Zählung der Sendungen in einem geeigneten Zeitraum wird eine Reservierung von Fächern für eine erste Benutzergruppe A durchgeführt. Die Reservierung kann ferner ein Sendungsavis an die betreffende Paketfachanlage beinhalten. Alle verbleibenden freien Fächer einer Anlage werden nach einem definierten Schema an andere Benutzergruppen vergeben.

Ein wesentlicher Aspekt ist somit ferner, dass in der Datenverarbeitungseinheit oder Steuereinheit einer Paketfachanlage 10 ein Zeitpunkt P festgelegt wird, an dem sämtliche Reservierungen aufgehoben werden. Beispielsweise kann es vorgesehen sein, dass Reservierungen bis mittags aufrechterhalten werden, diese jedoch danach aufgehoben werden, so dass nachmittags die verbleibenden freien Fächer allen Benutzergruppen zur Verfügung stehen. Während vormittags Reservierungen berücksichtigt werden, um insbesondere zu gewährleisten, dass direkt an die Paketfachanlage adressierte Sendungen eingestellt werden können, wird nachmittags das Prinzip angewendet, dass derjenige ein freies Fach bekommt, der zuerst an der Paketfachanlage eintrifft. Einzelne Benutzergruppen werden somit nicht mehr bevorzugt behandelt oder bekommen mehr Fächer bereitgestellt als andere Benutzergruppen, sondern verbleibende Fächer werden gleichberechtigt an alle Benutzer verteilt. Darüber hinaus können Fächer von mehreren Benutzergruppen genutzt werden. Beispielsweise kann der Endkunde Retouren in Fächer einstellen, die für die Benutzergruppe Zusteller reserviert sind, da dieser die Retouren entnehmen muss.

Der Zeitpunkt P kann fest in der Datenverarbeitungseinheit der Paketfachanlage 10 hinterlegt sein oder wird jeden Tag variabel von der zentralen Datenverarbeitungseinheit 30 bestimmt und als Signal an die Paketfachanlage übermittelt. Beispielsweise kann es vorgesehen sein, dass der Zeitpunkt P von der Datenverarbeitungseinheit 30 in Abhängigkeit von der Anzahl X der für die Benutzergruppe A reservierten Fächer abhängt. Ferner kann der Zeitpunkt in Abhängigkeit vom Wochentag oder der insgesamt zu erwartenden Zustellungen eines Zustellers in einem Zustellbezirk abhängig gemacht werden. In Zeiten mit hohem Postaufkommen wie beispielsweise in der Weihnachtszeit kann der Zeitpunkt sehr spät gewählt werden, um einem Zusteller ausreichend Zeit für die Einlieferung zu geben, bevor die für ihn erforderlichen Reservierungen aufgehoben werden.

Der Zeitpunkt P kann ferner in Abhängigkeit vom Standort der jeweiligen Paketfachanlage oder von der bereits erfolgten Belegung von reservierten Fächern gewählt werden. In einem Ausführungsbeispiel der Erfindung werden die Reservierungen beispielsweise aufgehoben, sobald alle Fächer der Benutzergruppe A von den entsprechenden Zustellern belegt wurden. Bis zu diesem Zeitpunkt werden auch andere Benutzergruppen entsprechend ihrer Reservierungen priorisiert, danach werden jedoch alle verbleibenden Reservierungen aufgehoben.

### Bezugszeichenliste:

- 10: Paketfachanlage
- 11: Fach
- 12: Benutzerschnittstelle, Benutzeroberfläche
- 20: Postverteilzentrum, PVZ
- 20': Postausgangszentrum, PZA
- 20": Posteingangszentrum, PZE
- 21: Datenverarbeitungsmittel im PVZ
- 21': Datenverarbeitungsmittel im PZA
- 21": Datenverarbeitungsmittel im PZE
- 22: Datenerfassungsmittel, OCR-Lesegerät, Scanner
- 22': Datenerfassungsmittel im PZA
- 22": Datenerfassungsmittel im PZE
- 30: Zentrale Datenverarbeitungseinheit, DV
- 31: Speichermittel
- 32: Datenbank, Kundendatenbank
- 40: Postsendung, Paket
- 41: Sendungsinformation

## Patentansprüche

1. Verfahren zum Betreiben wenigstens einer elektronischen Paketfachanlage (10) umfassend mehrere Fächer (11) der Anzahl F, bei dem Postsendungen von wenigstens zwei Benutzergruppen A und B mit unterschiedlichen Zugriffsrechten in die Fächer der Paketfachanlage (10) einstellbar sind, wobei die Paketfachanlage (10) in Verbindung mit einer zentralen Datenverarbeitungseinheit (30) steht und die Belegzustände der Fächer (11) der Paketfachanlage (10) an die Datenverarbeitungseinheit (30) übermittelt werden, so dass in einem Speichermittel (31) der Datenverarbeitungseinheit (30) die Anzahl Y an freien Fächern unterschiedlicher Größe der Paketfachanlage (10) hinterlegt ist, und die zentrale Datenverarbeitungseinheit (30) ferner in Verbindung mit wenigstens einem Postverteilzentrum (20) steht, in dem Zielinformationen von Postsendungen erfasst werden, wobei der Paketfachanlage (10) eine Zielinformation zugeordnet ist,
**gekennzeichnet durch** folgende Schritte:
(a) Festlegung eines Zeitraumes Z zwischen einem Start-Zeitpunkt und einem End-Zeitpunkt und Hinterlegung des Zeitraumes Z in einem Datenverarbeitungsmittel (21) des Postverteilzentrums (20);
(b) Erfassung von Zielinformationen und Größen von Postsendungen im Postverteilzentrum (20) mit einem Datenerfassungsgerät (22);
(c) Bestimmung der Anzahl X der Postsendungen, deren im Zeitraum Z erfasste Zielinformation mit der Zielinformation der Paketfachanlage (10) übereinstimmt, **durch** das Datenverarbeitungsmittel (21) des Postverteilzentrums (20);
(d) Übermittlung der Anzahl X von dem Datenverarbeitungsmittel (21) des Postverteilzentrums (20) an die zentrale Datenverarbeitungseinheit (30);
(e) Vergleich der Anzahl X mit der Anzahl Y an freien Fächern **durch** die zentrale Datenverarbeitungseinheit (30) ;
(f) Falls Y ≥ X, erfolgt eine Zuordnung von X freien Fächern der Paketfachanlage (10) zu einer ersten Benutzergruppe A **durch** die zentrale Datenverarbeitungseinheit (30);
(g) Übermittlung eines Steuerbefehls für eine Reservierung der zugeordneten X freien Fächer der Paketfachanlage (10) für die erste Benutzergruppe A von der Datenverarbeitungseinheit (30) an eine Steuereinheit der Paketfachanlage (10);
(h) Subtraktion der Anzahl X an reservierten Fächern von der Anzahl Y an freien Fächern zur Bestimmung der Anzahl V der verbleibenden verfügbaren Fächer in der Paketfachanlage (10) **durch** die zentrale Datenverarbeitungseinheit (30);
(i) Falls V > 1, erfolgt eine Zuordnung wenigstens eines Teils der verbleibenden verfügbaren Fächer V zu einer zweiten Benutzergruppe B **durch** die zentrale Datenverarbeitungseinheit (30);
(j) Übermittlung eines Steuerbefehls für eine Reservierung der zugeordneten Fächer für die zweite Benutzergruppe B von der Datenverarbeitungseinheit (30) an die Steuereinheit der Paketfachanlage (10);
(k) Erfassung von Benutzeridentifikationen und/oder Sendungsinformationen **durch** eine Benutzerschnittstelle (12) an der Paketfachanlage (10), Zuordnung eines Benutzers und/oder einer Postsendung zu den Benutzergruppen A oder B anhand der erfassten Benutzerinformationen und/oder Sendungsinformationen **durch** die Steuereinheit der Paketfachanlage (10);
(l) Steuerung des Zugriffs auf freie Fächer der Paketfachanlage (10) anhand der für die beiden Benutzergruppen A und B durchgeführten Reservierungen **durch** die Steuereinheit der Paketfachanlage (10);
(m) Bestimmung eines Zeitpunktes P **durch** die Steuereinheit der Paketfachanlage (10);
(n) Aufhebung der Reservierungen von Fächern für die Benutzergruppen A und B nach dem Zeitpunkt P **durch** die Steuereinheit und Freigabe des Zugriffs auf freie Fächer der Paketfachanlage (10) für alle Benutzergruppen **durch** die Steuereinheit.

2. Verfahren nach Anspruch 1,
**dadurch gekennzeichnet,**
**dass** Postsendungen von drei Benutzergruppen A, B und C in die Fächer der Paketfachanlage (10) einstellbar sind und beim Verfahrensschritt i) eine Zuordnung eines ersten Teils der verbleibenden verfügbaren Fächer V zur zweiten Benutzergruppe B erfolgt, während eine Zuordnung eines zweiten Teils der verbleibenden verfügbaren Fächer V zu einer dritten Benutzergruppe C erfolgt.

3. Verfahren nach Anspruch 2,
**dadurch gekennzeichnet,**
**dass** die verbleibenden verfügbaren Fächer V zu gleichen Teilen den Benutzergruppen B und C zugeordnet werden.

4. Verfahren nach Anspruch 2,
**dadurch gekennzeichnet,**
**dass** die verbleibenden verfügbaren Fächer V zu ungleichen Teilen den Benutzergruppen B und C zugeordnet werden.

5. Verfahren nach einem oder mehreren der Ansprüche 1 bis 4,
**dadurch gekennzeichnet,**
**dass** der Zeitpunkt P fest in der Steuereinheit der Paketfachanlage (10) hinterlegt ist.

6. Verfahren nach einem oder mehreren der Ansprüche 1 bis 4,
**dadurch gekennzeichnet,**
**dass** der Zeitpunkt P variabel in Abhängigkeit von unterschiedlichen Parametern festgelegt wird.

7. Verfahren nach Anspruch 5 oder 6,
**dadurch gekennzeichnet,**
**dass** der Zeitpunkt P von der zentralen Datenverarbeitungseinheit (30) festgelegt und an die Steuereinheit der Paketfachanlage (10) übermittelt wird.

8. Anordnung von Vorrichtungen zum Betreiben wenigstens einer elektronischen Paketfachanlage (10) umfassend mehrere Fächer (11) der Anzahl F, in die Postsendungen von wenigstens zwei Benutzergruppen A und B mit unterschiedlichen Zugriffsrechten einstellbar sind, wobei die Paketfachanlage (10) in Verbindung mit einer zentralen Datenverarbeitungseinheit (30) steht, die ein Speichermittel (31) zur Hinterlegung von Belegzuständen der Fächer (11) der Paketfachanlage (10) umfasst, so dass in dem Speichermittel (31) die Anzahl Y an freien Fächern unterschiedlicher Größe der Paketfachanlage (10) hinterlegbar ist, und die zentrale Datenverarbeitungseinheit (30) ferner in Verbindung mit wenigstens einem Postverteilzentrum (20) steht, das wenigstens ein Datenerfassungsgerät (22) zur Erfassung von Zielinformationen und der Größe von Postsendungen und ein Datenverarbeitungsmittel (21) umfasst, wobei der Paketfachanlage (10) eine Zielinformation zugeordnet ist,
**dadurch gekennzeichnet,**
**dass** das Datenverarbeitungsmittel (21) des Postverteilzentrums (20) folgende Merkmale umfasst:
- Mittel zur Festlegung eines Zeitraumes Z zwischen einem Start-Zeitpunkt und einem End-Zeitpunkt und Mittel zur Hinterlegung dieses Zeitraumes Z im Datenverarbeitungsmittel (21);
- Mittel zur Bestimmung der Anzahl X der im Zeitraum Z erfassten Postsendungen, deren Zielinformation mit der Zielinformation der Paketfachanlage (10) übereinstimmt;
- Mittel zur Übermittlung der Anzahl X an die zentrale Datenverarbeitungseinheit (30);
**dass** die Paketfachanlage (10) folgende Merkmale umfasst:
- Mittel zur Übermittlung von Belegzuständen der Fächer F an die zentrale Datenverarbeitungseinheit (30);
- Mittel zum Empfangen von Steuersignalen von der Datenverarbeitungseinheit (30) zur Reservierung von Fächern für wenigstens zwei Benutzergruppen A und B;
- Benutzeroberfläche zur Erfassung von Benutzer-und/oder Sendungsinformationen;
- Mittel zur Zuordnung von Benutzern und/oder Sendungen zu den Benutzergruppen A und B;
- Mittel zur Freigabe von freien Fächern anhand von Reservierungen für die Benutzergruppen A und B;
- Mittel zur Festlegung eines Zeitpunkts P und Mittel zur Aufhebung von Reservierungen zum Zeitpunkt P;
und die zentrale Datenverarbeitungseinheit (30) folgende Merkmale umfasst:
- Mittel zum Vergleich der Anzahl X mit der Anzahl Y an freien Fächern;
- Mittel zur Zuordnung der Y freien Fächer der Paketfachanlage (10) zu den wenigstens zwei Benutzergruppen A und B;
- Mittel zur Erzeugung von Steuerbefehlen zur Reservierung von Fächern der Paketfachanlage (10) und Mittel zur Übermittlung dieser Steuerbefehle an die Paketfachanlage (10).
